Europäisches Patentamt

European Patent Office

Office européen des brevets

(19)

(11) Veröffentlichungsnummer: **0 147 779**
**B1**

(12)                    ## EUROPÄISCHE PATENTSCHRIFT

(45) Veröffentlichungstag der Patentschrift: **24.10.90**

(21) Anmeldenummer: **84115776.1**

(22) Anmeldetag: **19.12.84**

(60) Teilanmeldung **89115440.3** eingereicht am **19/12/84.**

(51) Int. Cl.⁵: **C 08 J 7/02**, C 08 J 5/18, G 02 F 1/133

(54) **Verfahren zur Herstellung von Kunststoff-Folien mit verbesserten optischen Eigenschaften.**

(30) Priorität: **31.12.83 DE 3347684**

(43) Veröffentlichungstag der Anmeldung:
**10.07.85 Patentblatt 85/28**

(45) Bekanntmachung des Hinweises auf die Patenterteilung:
**24.10.90 Patentblatt 90/43**

(84) Benannte Vertragsstaaten:
**CH DE FR GB LI NL**

(56) Entgegenhaltungen:
**EP-A-0 044 702**
**DE-A-3 127 346**
**DE-B-1 232 336**

(73) Patentinhaber: **BAYER AG**
**D-5090 Leverkusen 1 Bayerwerk (DE)**

(72) Erfinder: **Weber, Hans-Leo, Dipl.-Ing.**
**Dahlienweg 7**
**D-4049 Rommerskirchen 2 (DE)**
Erfinder: **Claussen, Uwe, Dr.**
**Carl-Rumpff-Strasse 29**
**D-5090 Leverkusen (DE)**
Erfinder: **Hannes, Hellmut, Dr.**
**Carl-Rumpff-Strasse 53**
**D-5090 Leverkusen (DE)**

EP 0 147 779 B1

Courier Press, Leamington Spa, England.

## Beschreibung

Die Erfindung betrifft ein Verfahren zur Herstellung einer optisch nahezu isotropen Kunststoff-Folie und deren Verwendung bei Flüssigkristall-Sichtanzeigen. Gegenstand der vorliegenden Erfindung ist ein Verfahren zur Herstellung einer optisch nahezu isotropen Kunststoff-Folie, dadurch gekennzeichnet, daß in an sich bekannter Weise durch Gießen oder Extrudieren eine optisch einachsige, doppelbrechende Kunststoff-Folie hergestellt wird und anschließend in oberflächen nahen Schichten der Folie irreversible Relaxationsprozesse durch Tauchen in ein Lösungs- oder Quellungsmittel ausgelöst werden, die eine molekulare Umorientierung in den oberflächen nahen Schichten bewirken, welche nach dem Trocknen der Folie bestehenbleibt und eine Aufhebung bzw. Kompensation der Doppelbrechung zur Folge hat, wobei die Folie nur während einer so kurzen Zeit in das Tauchbad gebracht wird, daß das Lösungsmittel von der Oberfläche aus insgesamt 10 bis 30%, vorzugsweise 15 bis 20% des Folienvolumens erfaßt.

Bei den meisten technischen Anwendungen von Kunststoff-Folien wirkt sich die häufig vorhandene optische Anisotropie, die zu einer Doppelbrechung führt, nicht aus. Solche Anwendungen sind z.B. Zeichenfolien in der Kartographie, Informationsträger für Signalanzeigen, Farbfilter, Membranschalter und Reflex-Folien.

Dagegen ist die Isotropie eine wichtige Eigenschaft, wenn die Kunststoff-Folien in optischen Geräten oder Anordnungen verwendet werden, die mit polarisiertem Licht arbeiten. Dies ist z.B. bei den bekannten Flüssigkristall-Anzeigeeinheiten (LCD) der Fall. Die bei solchen Anzeigeeinheiten verwendeten Fenster oder Substrate dürfen keinen störenden Einfluß auf das polarisierte Licht ausüben. Bekanntlich beruht die Doppelbrechung in einem optisch einachsigen Kristall darauf, daß Lichtwellen mit senkrecht aufeinander stehenden Polarisationsebenen in der Regel verschieden starke Ausbreitungsgeschwindigkeiten im Kristall annehmen. Gleichzeitig mit der Doppelbrechung wird der Polarisationszustand des Lichtes verändert. Es leuchtet daher ein, daß die Verwendung von doppelbrechenden Kunststoff-Folien als Fenster bei Anzeigeeinheiten (displays) zu großen Schwierigkeiten führt, wenn der Anzeigeeffekt seinerseits auf einer durch das elektrische Feld beeinflußten Doppelbrechung oder Drehung der Polarisationsebene in der flüssigen Kristallschicht beruht. Die Lösung des Problems der Doppelbrechung bildet daher die wesentliche Voraussetzung für die technische Verwendung von Kunststoff-Folien in Flüssigkristall-Anzeigeeinheiten. Aus diesem Grund wird bei Flüssigkristall-Anzeigen bisher Glas als universeller und einzig technisch brauchbarer Werkstoff eingesetzt. Die Verwendung von Glas ist jedoch mit einer Reihe von Nachteilen verbunden. Wegen der schwierigen Verarbeitung von Glas können nur bestimmte, von der Maschinenausrüstung abhängige Formate bereitgestellt werden, die sich kostengünstig durch Ritzen und Brechen nur auf Rechteckformate unterteilen lassen. Dabei entstehende Glassplitter können die Funktion der Anzeige beeinträchtigen und damit zu Ausfällen führen.

Weiterhin ist der Handhabungs- und Lagerungsaufwand bei den anfallenden hohen Stückzahlen und verschiedenen Formaten erheblich. Darüber hinaus bedingt die Zerbrechlichkeit des Glases Plattenstärken von mindestens 1 mm, so daß sich das Eigengewicht der Glasplatten im Vergleich zu den anderen Bauelementen der Anzeigeeinheit störend bemerkbar macht.

Es hat daher nicht an Versuchen gefehlt, durchsichtige Kunststoffe bei Flüssigkristall-Anzeigen einzusetzen (siehe z.B. US—A—4 228 574, GB—A—2 052 779, SID 81, Seite 86 und Seite 116 und SID 82, Seite 178 bis 181). Kunststoff ist aber in der Regel nicht gleichzeitig isotrop und mechanisch oder chemisch besonders widerstandsfähig. Außerdem läßt sich die Technologie der Flüssigkristall-Anzeigen auf der Basis von Glas nicht ohne weiteres auf Kunststoff übertragen. Zwar kann man für jeden Verfahrensschritt der Glastechnologie einen Kunststoff finden, der den Eigenschaften des Glases nahekommt oder es sogar übertrifft. Bislang ist jedoch keine Flüssigkristall-Anzeige auf der Basis von Kunststoffen bekannt geworden, die der Glas-Flüssigkristall-Anzeige ebenbürtig wäre, da es keinen Kunststoff gibt, der gleichzeitig alle geforderten Eigenschaften erfüllt.

Es ist auch bekannt, Polycarbonat-Folien für diesen Zweck zu verwenden (JP—A—55 017 135). Ferner ist es aus der DT—AS 1 232 336 bekannt, die elektrischen und mechanischen Eigenschaften von Polycarbonat-Folien durch Behandlung in einem Lösungs- oder Quellmittelbad zu verbessern. Die Änderung dieser Eigenschaften ist auf eine Strukturänderung der Folie zurückzuführen, die durch einen Schrumpfungsprozeß bedingt ist. Dem Problem der optischen Doppelbrechung wird jedoch keine Beachtung geschenkt.

Gegenstand der DE—A—3127346 sind transparente, elektrischleitende, isotrope Folien für Flüssigkristall-Anzeigsysteme aus verschiedenen Kunststoffen.

Hierbei erfolgt die Herstellung der Folien beispielsweise durch Gießen und anschließendes Trocknen der Folien im Heißluftstrom. Das nachträgliche Tauchen von Folien wird durch die Lehre der DE—A—3127346 weder vorbeschrieben noch nahegelegt.

Der Erfindung liegt deshalb die Aufgabe zugrunde, auf einfache Weise Kunststoff-Folien bereitzustellen, bei denen die Doppelbrechung eliminiert oder zumindest stark reduziert ist. Für ihren Einsatz in Flüssigkristall-Anzeigen müssen die Folien neben ausreichenden mechanischen Eigenschaften wie Formstabilität, Wasserdampfdurchlässigkeit, Kratzfestigkeit sowie Temperaturunempfindlichkeit sich leicht und kontinuierlich zu allen geforderten Formaten verarbeiten lassen und chemisch gegen die Einwirkung vielfältiger Hilfschemikalien wie Farbstoffe, Orientierungsschichten usw. beständig sein.

Diese Aufgabe wird erfindungsgemäß dadurch gelöst, daß zunächst in bekannter Weise durch Gießen oder Extrudieren eine optisch einachsige, doppelbrechende Kunststoff-Folie hergestellt wird und anschließend in oberflächennahen Schichten der Folie durch Tauchen in ein Lösungs- oder Quellungsmittel irreversible Struktur-Relaxationsprozesse ausgelöst werden, die eine molekulare Umorientierung in den oberflächennahen Schichten bewirken, welche nach dem Trocknen der Folie bestehenbleibt und eine Aufhebung bzw. Kompensation der Doppelbrechung zur Folge hat. Durch den Tauchprozeß wird der molekulare Verband der Moleküle in oberflächennahen Zonen offensichtlich so stark gelockert, daß eine molekulare Umorientierung (Relaxation) ermöglicht wird und die Doppelbrechung nahezu ganz verschwindet. Überraschend ist, daß diese Umorientierung irreversibel bleibt; d.h. beim Trocknen sozusagen eingefroren wird. Wesentlich ist dabei, daß die Folie nur für eine relativ kurze Zeit dem Lösungs- oder Quellungsmittel ausgesetzt wird. Unter einer "oberflächennahen Schicht" wird hier definitionsgemäß ein Bereich verstanden, der 10 bis 30%, vorzugsweise 15 bis 20%, der Gesamtdicke der Folie entspricht.

Somit erfolgt die Behandlung der Folie in einem Tauchbad nur während einer so kurzen Zeit, daß nicht die gesamte Folie von dem Lösungsmittel durchtränkt wird, sondern das Lösungsmittel nur in die äußeren, oberflächennahen Schichten, eindiffundieren kann. Das Eindringen der Lösungsmittelfront in die Folie kann mit einem Interferenzmikroscop sichtbar gemacht werden. Eine Schrumpfung der Folie, wie sie als Folge einer länger dauernden Einwirkung des Lösungs- bzw. Quellmittels auftritt, konnte bei den hier durchgeführten Versuchen nicht beobachtet werden. Nach dem Trocknen erhält man eine Folie mit einer glasklaren Oberfläche hoher optischer Güte.

Die ursprünglich vorhandene Doppelbrechung wird durch die Tauchbadbehandlung so stark reduziert, daß praktisch keine Änderung des Polarisationszustandes eintritt, wenn diese Folien in Verbindung mit LCD-Displays verwendet werden. Eine mögliche Erklärung für die Reduzierung der Doppelbrechung besteht darin, daß, bedingt durch den Herstellungsprozeß (Gießen), in oberflächennahen Schichten gerichtete Molekülstrukturen vorhanden sind, die eine Anisotropie und damit optische Doppelbrechung verursachen. Beim Anlösen dieser Schichten wird nun der Molekularverband gelockert und die Beweglichkeit der Moleküle so weit erhöht, daß die oben erwähnten Ausgleichs- und Relaxationsvorgänge stattfinden können und die Anisotropie weitgehend verschwindet. Beim nachfolgenden Trocknen wird die Beweglichkeit dann wieder "eingefroren". Dabei bleibt überraschenderweise die molekulare Umorientierung in den oberflächennahen Schichten erhalten.

Zweckmäßig geht man von gegossenen Kunststoff-Folien aus, deren Dicke im Bereich von 5 µm bis 0,8 mm liegt. Die anschließende Behandlung mit einem Quellungs- oder Lösungsmittel erfolgt in der Weise, daß die Folien in einem Bad 1 s bis 5 min, vorzugsweise 10 s bis 2 min, dem Lösungs- bzw. Quellungsmittel ausgesetzt werden. Die Behandlung erfolgt bei Raumtemperatur. Die Trocknung der angelösten oder angequollenen Folien erfolgt in einem Luftstrom bei Temperaturen von 20° bis 140°C.

Als Ausgangsmaterial für die Folien werden vorteilhaft Polymere verwendet, für die ein Lösungs- oder Quellungsmittel angegeben werden kann, das neben dem gewünschten Isotropie-Effekt keine unerwünschten Nebeneffekte wie z.B. Trübung erzeugt und eine klare homogene Oberfläche liefert. In Frage kommen z.B. Polystyrol, Polyvinylchlorid, Polyacrylsäureester und Polyester.

Geeignete Lösungsmittel bzw. Quellmittel für die erforderliche Behandlung sind Xylol, Cyclohexanon, Tetrahydrofuran, Methylethylketon, Toluol, Benzylalkohol, Dimethylformamid, Methylenchlorid, Aceton, Ethylether, Ethylenchlorid, Trichlorethan, Chloroform, m-Kresol, Pyridin, Dioxan, Benzol, Chlorbenzol, Tetralin, Ethylacetat, Acetonitril, Tetrachlorkohlenstoff.

Besonders bewährt haben sich Polycarbonat-Folien, die vorteilhaft in ein Tetrahydrofuranbad getaucht werden.

Die so hergestellten, nahezu doppelbrechungsfreien Kunststoff-Folien sind als Bauelemente (Fenster oder Substrate) für Flüssigkristall-Displays geeignet, bei denen die Anzeige mit polarisiertem Licht erfolgt.

Gegenstand der vorliegenden Erfindungs ist somit auch die Verwendung der nach dem erfindungsgemäßen Verfahren hergestellten Kunststoff-Folie als Fenster oder Substrat bei Flüssigkristall-Anzeigeeinheiten, die mit polarisiertem Licht arbeiten.

Beispiel 1
(Tauchbadbehandlung)

Bisphenol-A Polycarbonat mit einem mittleren Molgewicht von 98.000 wird bei 20°C in Methylenchlorid (0,5 g/ml) gelöst und diese Lösung auf einen langsam rotierenden, beheizten und polierten Zylinder über eine Rakelvorrichtung aufgegeben. Man erhält einen klaren durchsichtigen Film mit einer Schichtdicke von 200 µm. Diese Folie wird in einem Polarisationsmikroscop zwischen gekreuzten Polarisatoren quantitativ mit einem Kompensator analysiert. Es ergibt sich eine starke Doppelbrechung entsprechend einem Gangunterschied von ΔG = 74 nm. Das Produkt ist optisch einachsig. Die Folie wird dann 10 Sek. in Tetrahydrofuran bei Temperaturen von 20°C getaucht und anschließend im Luftstrom bei 110°C 3 Min. lang getrocknet. Die erneute Untersuchung der Folie mit dem Polarisationsmikroscop ergibt nur noch einen Gangunterschied von 14 nm, was mit einer stark verminderten Doppelbrechung gleichbedeutend ist. Bringt man die ungetauchte und noch doppelbrechende Folie in einen Strahlengang mit gekreuzten Polarisationsfiltern, so zeigt sich eine deutliche Aufhellung. Diese Aufhellung ist darauf zurückzuführen, daß mit der Doppelbrechung der Polarisationszustand des Lichtes verändert wird. Da der Anzeigeeffekt bei vielen Displays gerade auf einem zwischen gekreuzten Polarisatoren beobachteten Aufhellungseffekt beruht, wirkt sich die durch die Doppelbrechung der Folie verursachte Aufhellung störend aus und kann sogar den Anzeigeeffekt völlig überdecken. Dagegen ist nach dem Tauchen und Trocknen der Folie praktisch keine Aufhellung mehr festzustellen. Die so behandelte Folie ist nahezu doppelbrechungsfrei und damit für den Einbau in LCDs geeignet.

**Patentansprüche**

1. Verfahren zur Herstellung einer optisch nahezu isotropen Kunststoff-Folie, dadurch gekennzeichnet, daß in an sich bekannter Weise durch Gießen oder Extrudieren eine optisch einachsige, doppelbrechende Kunststoff-Folie hergestellt wird, und anschließend in oberflächennahen Schichten der Folie irreversible Relaxationsprozesse durch Tauchen in ein Lösungs- oder Quellungsmittel ausgelöst werden, die eine molekulare Umorientierung in den oberflächennahen Schichten bewirken, welche nach dem Trocknen der Folie bestehenbleibt und eine Aufhebung bzw. Kompensation der Doppelbrechung zur Folge hat, wobei die Folie nur während einer so kurzen Zeit in das Tauchbad gebracht wird, daß das Lösungsmittel von der Oberfläche aus insgesamt 10% bis 30%, vorzugsweise 15% bis 20% des Folienvolumens erfaßt.

2. Verfahren nach Anspruch 1, dadurch gekennzeichnet, daß Folien mit einer Dicke von 5 µm bis 800 µm, vorzugsweise 50 µm bis 300 µm, verwendet werden.

3. Verfahren nach Anspruch 1, dadurch gekennzeichnet, daß die Folie dem Tauchbad 1 s bis 5 min, vorzugsweise 10 s bis 2 min ausgesetzt wird.

4. Verfahren nach Anspruch 1—3, dadurch gekennzeichnet, daß eine Polycarbonatfolie verwendet wird.

5. Verfahren nach Anspruch 4, dadurch gekennzeichnet, daß als Lösungsmittel Tetrahydrofuran verwendet wird.

6. Verwendung einer nach Anspruch 1 bis 5 hergestellten Kunststoff-Folie als Fenster oder Substrat bei Flüssigkristall-Anzeigeeinheiten, die mit polarisiertem Licht arbeiten.

**Revendications**

1. Procédé de production d'une feuille de matière plastique pratiquement isotrope du point de vue optique, caractérisé en ce qu'on produit d'une manière connue, par coulée ou par extrusion, une feuille de matière plastique biréfrigente à un seul axe optique, puis on déclenche dans des couches proches de la surface de la feuille, par immersion dans un solvant ou dans un agent gonflant, des processus de relaxation irréversibles qui provoquent dans les couches proches de la surface un changement d'orientation moléculaire qui persiste après le séchage de la feuille et qui a pour conséquence une suppression ou une compensation de la biréfringence, la feuille n'étant plongée dans le bain d'immersion que pendant un temps assez court pour que la solvant couvre au total 10 à 30%, de préférence 15 à 20% du volume de la feuille, compté depuis la surface.

2. Procédé suivant la revendication 1, caractérisé en ce qu'on utilise des feuilles d'une épaisseur de 5 µm à 800 µm, de préférence de 50 µm à 300 µm.

3. Procédé suivant la revendication 1, caractérisé en ce que la feuille est exposée à l'action du bain d'immersion pendant 1 seconde à 5 minutes, de préférence pendant 10 secondes à 2 minutes.

4. Procédé suivant les revendications 1 à 3, caractérisé en ce qu'on utilise une feuille de polycarbonate.

5. Procédé suivant la revendication 4, caractérisé en ce qu'on utilise le tétrahydrofuranne comme solvant.

6. Utilisation d'une feuille de matière plastique produite selon les revendications 1 à 5 comme fenêtre ou comme substrat dans des unités d'affichage à cristaux liquides qui travaillent en lumière polarisée.

**Claims**

1. A process for the production of an optically substantially isotropic plastic film, characterized in that an optically monoaxial, birefringent plastic film is produced in known manner by casting or extrusion and irreversible relaxation processes are subsequently initiated in layers of the film near the surface by immersion in a solvent or swelling agent, resulting in a molecular reorientation in the layers near the surface which remains intact after drying of the film and results in elimination or compensation of the birefringence, the film being introduced into the immersion bath for such a short time that, from the surface, the solvent affects a total of 10 to 30% and preferably 15 to 20% of the film volume.

2. A process as claimed in claim 1, characterized in that 5 to 800 µm and preferably 50 to 300 µm thick films are used.

3. A process as claimed in claim 1, characterized in that the film is exposed to the immersion bath for 1 s to 5 mins. and preferably for 10 s to 2 mins.

4. A process as claimed in claims 1 to 3, characterized in that a polycarbonate film is used.

5. A process as claimed in claim 4, characterized in that tetrahydrofuran is used as the solvent.

6. The use of a plastic film produced by the process claimed in claims 1 to 5 as a window or substrate in liquid-crystal display units operating with polarized light.